# EUROPÄISCHE PATENTANMELDUNG

(11) **EP 0 662 498 A1**
(43) Veröffentlichungstag der Anmeldung: **12.07.1995**
(21) Anmeldenummer: 94120768.0
(22) Anmeldetag: 27.12.1994
(51) Int. Cl.: C09B 67/24, D06P 1/38

(54) **Farbstoffpräparationen**

(30) Priorität: 07.01.1994 DE 4400322
(71) Anmelder: BAYER AG, 51368 Leverkusen (DE)
(72) Erfinder: Marschner, Werner, Dipl.-Ing., D-51377 Leverkusen (DE); Hoppe, Manfred, Dr., D-51515 Kürten (DE)

(57) **Zusammenfassung**

Es wurden Farbstoffpräparationen gefunden, enthaltend
a) einen alkalisch fixierbaren Reaktivfarbstoff
b) Pigment
c) Dispersionsbinder,
ein Verfahren zu ihrer Herstellung, ihre Verwendung in wäßrigen Färbeflotten sowie die dabei erhaltenden Färbeflotten und ein Verfahren zum Färben oder Bedrucken von zellulosehaltigen Fasermaterialien zur Erlangung modischer Auswascheffekte.

## Beschreibung

Gefärbte Textilien, insbesondere zellulosehaltige Fasermaterialien, mit sogenannten wash-out bzw. fade-out Effekten sind besonders für das Gebiet der Freizeitbekleidung von großem Interesse. Diese auch als Bicolour-Effekte bezeichneten optischen Eindrücke wurden bislang beispielsweise in R.J. Harper, A.H. Lambert "Textile Chemist and Colorist" 1992, Vol. 24, Nr. 2, S. 13, durch eine spezielle Steinbehandlung von mit Pigmenten gefärbter oder noch zu färbender Ware erhalten.

Die bereits bestehenden Lösungen dieses Problems zeigen aber hinsichtlich der Qualität dieser modischen Effekte noch verbesserungsfähige Eigenschaften auf. So werden beispielsweise nach nur einigen Haushaltswäschen derartig gefärbter Materialien so starke Aufhellungen beobachtet (weiße Scheuerstellen), daß sie über den gewünschten Effekt hin bis zur Unansehlichkeit der Textilien führen.

Die vorliegende Erfindung betrifft die Bereitstellung neuer Färbepräparationen, ihren Einsatz zum Drucken und Farben von zellulosehaltigen Fasermaterialien sowie wäßrige Flotten zum Klotzen von zellulosehaltigen Fasermaterialien und ein Verfahren zu ihrer Herstellung.

Es wurden nun Farbstoffpräparationen gefunden enthaltend:
a) mindestens einen alkalisch fixierbaren Reaktivfarbstoff
b) mindestens ein Pigment und
c) mindestens einen Dispersionsbinder.

Im Rahmen dieser Anmeldung wird unter Pigment auch Ruß verstanden.

Die Präparationen können in flüssiger (flüssige Einstellung oder Druckpasten) oder fester (Pulver oder Granulat) Form vorliegen.

Die zu färbenden oder zu bedruckenden zellulosehaltigen Fasermaterialien sind beispielsweise Cellulose sowie deren Mischgewebe mit beispielsweise Polyester und Regenerat-Cellulose.

Die verwendeten Reaktivfarbstoffe sind alkalisch fixierbar und haben einen beliebigen farbgebenden Teil wie z.B. Reste eines sulfogruppenhaltigen organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbonimid-Reihe.

Die eingesetzten alkalisch fixierbaren Reaktivstoffe haben vorzugsweise mindestens einen aromatisch heterocyclischen Reaktivrest und/oder mindestens einen Reaktivrest der Formel -SO₂M, worin
- M =: CH₂-CH₂-OH, CH=CH₂ oder CH₂-CH₂-V, worin V = alkalisch eliminierbarer Rest, bevorzugt OSO₃H, SSO₃H, OCOCH₃, OPO₃H₂, OSO₂CH₃, SCN, NHSO₂CH₃, Cl, Br, F, OCOC₆H₅, OSO₂-C₆H₅, ^{⊕}N(CH₃)₃-Anion (Anion ist bevorzugt Cl⁻), die unter den Färbebedingungen mit den OH- oder NH-gruppenhaltigen Fasern unter Ausbildung kovalenter Bindungen reagieren. Zu nennen sind vorzugsweise solche, die mindestens einen reaktiven Substituenten an einen 5- oder 6-gliedrigen aromatisch-heterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin-oder Phenanthridin-Ring-System, oder solche, die mit zusätzlichen reaktiven Gruppen vom Vinylsulfon-Typ substituiert sind.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido-(N₃), Rhodanido, Thiolether, Oxyether, Sulfinsäure und Sulfonsäure.

Im einzelnen sind beispielsweise folgende faserreaktiven Reste zu nennen:
2,4-Difluortriazinyl-6-, 2,4-Dichlortriazinyl-6-, Monohalogen-sym.-triazinylreste, insbesondere Monochlor- und Monofluortriazinylreste, die gegebenenfalls durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl, vorzugsweise gegebenenfalls substituiertes C₁-C₄-Alkyl, Aralkyl, vorzugsweise gegebenenfalls substituiertes Phenyl-C₁-C₄-alkyl und Aryl, vorzugsweise gegebenenfalls substituiertes Phenyl oder Naphthyl bedeutet und wobei bevorzugte Substituenten für Alkyl Halogen, Hydroxy, Cyan, Dialkylamino, Morpholino, C₁-C₄-Alkoxy, Carboxy, Sulfo oder Sulfato sind und für Phenyl und Naphthyl, Sulfo, C₁-C₄-Alkyl, C₁-C₄-Alkoxy, Carboxy, Halogen, Acylamino, Hydroxy und Amino. Weiter zu nennen sind 2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethylamino-4-fluor-triazinyl-6, 2-Benzylamino-4-fluortriazinyl-6, 2-β-Phenylethylamino-4-fluor-triazinyl-6, 2-Benzyl-methylamino-4-fluor-triazinyl-6, 2-(4'-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6,2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-amino-4-fluor-triazinyl-6, 2-(3',6',8'-Trisulfonaphthyl-(2'))-amino-4-fluor-triazinyl-6, 2-(3',6'-Disulfonaphthyl-(1'))-amino-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl, N-Methyl-bzw. N-Ethyl-N-(2,4-dichlortriazinyl-6)-aminoacetyl-, 2-Methoxy-4-fluor-triazinyl-6, 2-Ethoxy-4-fluortriazinyl-6, 2-Phenoxy-4-fluor-triazinyl-6, 2-(o-, m- oder p-Sulfophenoxy)-4-fluortriazinyl-6, 2-(o, m-oder p-Methyl- oder -Methoxy-phenoxy)-4-fluor-triazinyl-6, 2-β-Hydroxyethylmercapto-4-fluor-triazinyl-6, 2-Phenylmercapto-4-fluor-triazinyl-6, 2-(4'-Methylphenyl)-mercapto-4-fluortriazinyl-6, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten, insbesondere Benzolsulfinsäure oder Hydrogensulfit erhältlichen Reste sowie Di- oder Trihalogenpyrimidinylreste, wie 2,4-Dichlorpyrimidinyl-6, 2,4,5-Trichlorpyrimidinyl-6, 4,5-Dichlorpyrimidinyl-6-, 2,4-Difluorpyrimidinyl-6-, 4,5-Difluorpyrimidinyl-6-, 4-Fluor-5-chlorpyrimidinyl-6-, 2,4-Difluor-5-chlorpyrimidinyl, sowie 2,3-Dichlorchinoxalin-5-carbonyl und 2,3-Dichlorchinoxalin-6-carbonyl.

Unter alkalisch fixierbaren Reaktivfarbstoffen werden auch Mischungen von Reaktivfarbstoffen der obengenannten Art verstanden.

Die verwendeten Pigmente unterliegen keiner Beschränkung. Sie können sowohl anorganischer als auch organischer Natur sein, als auch Ruß sein.

Geeignete organische Pigmente sind z.B. solche der Azo-, Anthrachinon-, Thioindigo-Reihe, ferner andere polycyclische Pigmente, z.B. aus der Phthalocyanin-, Chinacridon-, Dioxazin-, Naphthalintetracarbonsäure-, Perylentetracarbonsäure- oder Isoindolin-Reihe sowie Metallkomplex-Pigmente oder verlackte Farbstoffe wie Ca-, Mg-, Al-Lacke von sulfonsäure- und/oder carbonsäuregruppenhaltigen Farbstoffen, von denen eine große Zahl beispielsweise aus Colour-Index, 2. Auflage, bekannt ist.

Geeignete anorganische Pigmente sind beispielsweise Zinksulfide, Ultramarine, Titandioxide, Eisenoxide, Nickel- oder Chromantimontitandioxide, Kobaltblau, Chromoxide und Chromatpigmente.

Die Pigmente können weiterhin Ruß sein, Vorzugsweise Carbon Black.

Die Farbtöne der eingesetzten Pigmente können sich an denen der Reaktivfarbstoffe orientieren, sind davon aber grundsätzlich unabhängig. Die Pigmente können auch in Form von Pigmentmischungen eingesetzt werden.

Als Dispersionsbinder werden vorzugsweise solche auf Basis von Acrylat/Acrylnitril, Styrol, Acrylsäureester, Vinylacetat, Butadien oder Mischungen davon eingesetzt. (s.a. M. Peter, H.K. Rauette "Grundlagen der Textilveredelung" Deutscher Fachverlag 13. Auflage, 1989 S. 626 ff).

Die Pigmentpräparationen können darüber hinaus die üblichen Zusätze von Präparationen enthalten. Dies sind beispielsweise für Druckpasten, Anpastungsmittel für flüssige Einstellungen, Pufferzusätze zur Stabilisierung der Reaktivfarbstoffe gegen Hydrolyse und Ausfällungen, bei festen Präparationen Zusätze wie beispielsweise Granulierhilfsmittel oder Entstaubungsmittel. Weitere übliche Zusätze ergeben sich aus dem Herstellungsprozeß dieser Präparationen der ebenfalls ein weiterer Gegenstand dieser Erfindung ist.

Die obigen Reaktivfarbstoff-Pigment-Präparationen werden dadurch hergestellt, daß man mindestens einen alkalisch fixierbaren Reaktivfarbstoff, mindestens ein Pigment und/oder Ruß und mindestens einen Dispersionsbinder mischt, gegebenenfalls homogenisiert und gegebenenfalls unter Zugabe weiterer Zusätze wie Entstaubungsmittel zu einer festen Präparation verarbeitet.

Desweiteren kann die erfindungsgemäße Präparation dadurch hergestellt werden, daß man mindestens einen alkalisch fixierbaren Reaktivfarbstoff, mindestens ein Pigment und/oder Ruß und mindestens einen Dispersionsbinder zu einer wäßrigen Dispersion verarbeitet, die gegebenenfalls nach Zugabe weiterer Zusätze zu einer flüssigen Präparation oder Druckpaste weiterverarbeitet wird oder durch Trocknungsverfahren (beispielsweise Sprühtrocknung) in eine feste Pulver- oder Granulatform überführt wird. Dabei zum Einsatz kommende Reaktivfarbstoffe und/oder Pigmente oder deren Mischungen sowie die Dispersionsbinder können bereits Bestandteil fertiger Farbstoffpräparationen und/oder Einstellungen sein.

Die Erfindung betrifft weiterhin ein Klotzfarbeverfahren zum Färben von zellulosehaltigen Fasermaterialien, dadurch gekennzeichnet, daß eine wäßrige Flotte verwendet wird, die
a) mindestens einen alkalisch fixierbaren Reaktivfarbstoff,
b) mindestens ein Pigment und
c) mindestens einen Dispersionsbinder
enthält.

Als Alkali wird bei dem erfindungsgemäßen Klotzfarbeverfahren vorzugsweise Natriumbicarbonat verwendet.

Die bei dem erfindungsgemäßen Färbeverfahren eingesetzten Färbeflotten enthalten im allgemeinen:
800 - 900 Gew.-Teile Wasser
1 - 100 Gew.-Teile alkalisch fixierbaren Reaktivfarbstoff
1 - 100 Gew.-Teile Pigment und
10 - 40 Gew.-Teile Dispersionsbinder
und sind ebenfalls Gegenstand der Erfindung.

In einer bevorzugten Ausführungsform enthalten diese Färbeflotten
800-900 Gew.-Teile Wasser
1-100 Gew.-Teile alkalisch fixierbaren Reaktivfarbstoff
1-100 Gew.-Teile Pigment
10-40 Gew.-Teile Dispersionsbinder
0-5 Gew.-Teile Netzmittel
5-10 Gew.-Teile NaHCO₃
0-50 Gew.-Teile weitere Zusätze.

Weiterer Gegenstand der vorliegenden Erfindung ist ein Verfahren zum Bedrucken von zellulosehaltigen Fasermaterialien mit den erfindungsgemäßen Präparationen.

Nach dem Klotzen bei einer Temperatur von im allgemeinen 20 bis 30°C mit einer Flottenaufnahme von vorzugsweise 50 bis 80 % wird das Färbegut bei einer Temperatur von vorzugsweise 100 bis 150°C getrocknet und anschließend bei einer Temperatur von vorzugsweise 140 bis 160°C fixiert (ca. 1 bis 2 Minuten).

Die Fixierung des Reaktivfarbstoffs und des Pigments kann sowohl durch den Trockenhitzeprozeß als auch durch überhitzten Dampf erfolgen. Als weitere Zusätze sind einerseits übliche Bestandteile von Reaktivfarbstoff- oder Pigmentpräparationen zu nennen als auch übliche Färbereihilfsmittel. Unter üblichen Färbereihilfsmitteln werden vorzugsweise Netzmittel (wie sie beispielsweise in A. Chwala, V. Anger, "Handbuch der Textilhilfsmittel", Verlag Chemie, Weinheim 1977, S. 525 ff beschrieben sind), Egalisierhilfsmittel oder Salze verstanden.

Deutlich wird der gewünschte Auswascheffekt bei späterem Waschen des gefärbten Fasermaterials vor oder nach der Konfektionierung.

### Beispiele

### Beispiel 1

### Flotte a)

30 Gew.-Teile eines Reaktivfarbstoffs der Formel 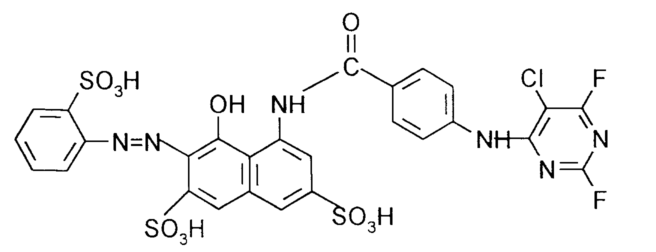
in Form des Na-Salzes und 2 Gew.-Teile eines Netzmittels auf Basis von Octylphosphat (enthaltend Octylphosphate, Ethylenglykol und Wasser) werden in 593 Gew.-Teilen Wasser bei 40-60°C gelöst.

### Flotte b)

25 Gew.-Teile eines Binders auf Basis Acrylat/Acrylnitril (ein Copolymerisat aus den Monomeren Butylacrylat, Styrol, Acrylniril und Acrylsäure, als wäßrige Flüssigkeit mit einer Viskosität (pH 6,6-7) von ca. 100 mPa.s bei D = 1,5 s⁻¹) und 30 Gew.-Teile Pigment (Pigment Orange C.I. 13) werden mit 300 Gew.-Teilen Wasser und 10 Gew.-Teilen Polyacrylsäure (siehe beispielsweise A. Chwala u. V. Anger, "Handbuch der Textilhilfsmittel" Verlag Chemie Weinheim 1977 S. 391 ff) versetzt.

Die beiden Flotten a) und b) werden bei 25°C vereinigt und 10 Gew.-Teile Natriumbicarbonat der Gesamtflotte zugegeben.

Mit dieser Flotte wurde Baumwollgewebe bei Raumtemperatur und einer Flottenaufnahme von 65 % geklotzt, bei 120°C getrocknet und 1-2 min bei 150-160°C fixiert.

Die erhaltene Orangerotfärbung zeigte nach wenigen Haushaltswäschen den gewünschten Effekt, der sich bei weiteren Wäschen kaum weiter veränderte.

### Beispiel 2

Zwei Flotten wurden gemäß Beispiel 1 hergestellt.

### Flotte a)

25 Gew.-Teile eines Reaktivfarbstoff der Formel 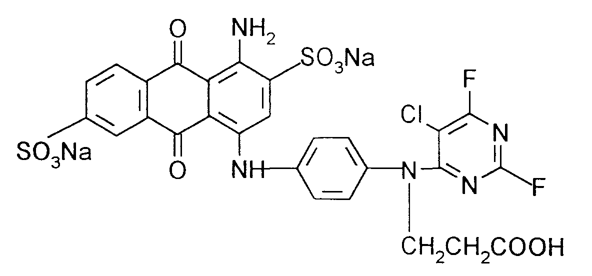
2 Gew.-Teile Netzmittel auf Basis von Octylphosphat (wie in Bsp. 1)
613 Gew.-Teile Wasser

### Flotte b)

20 Gew.-Teile Pigment (Pigment Yellow C.I. 74)
20 Gew.-Teile des Binders aus Beispiel 1
10 Gew.-Teile Polyacrylsäure aus Beispiel 1
300 Gew.-Teile Wasser
Die Flotten a) und b) wurden bei 25°C vereinigt und der Gesamtflotte 10 Gew.-Teile Natriumbicarbonat zugegeben.

Mit der so hergestellten Flotte wurde mercerisiertes Baumwollgewebe bei Raumtemperatur und einer Flottenaufnahme von 65 % geklotzt, bei 120°C getrocknet und 1-2 min bei 150-160°C fixiert.

Das gefärbte Gewebe zeigte eine Zweifarbigkeit und den gewünschten Auswascheffekt nach wenigen Haushaltwäschen. Nach weiteren Haushaltswäschen blieb dieser Effekt unverändert.

### Beispiel 3

Zwei Flotten wurden gemäß Beispiel 1 hergestellt.

### Flotte a)

35 Gew.-Teile des Reaktivfarbstoffs der Formel 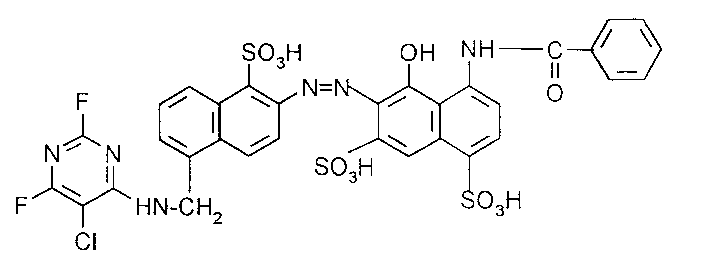
in Form des Na-Salzes,
2 Gew.-Teile des Netzmittels aus Beispiel 1
583 Gew.-Teile Wasser.

### Flotte b)

20 Gew.-Teile Pigment (Pigment Blue C.I. 15.3)
40 Gew.-Teile des Dispersionsbinder aus Beispiel 1
10 Gew.-Teile Polyacrylsäure (Beispiel 1)
300 Gew.-Teile Wasser.

Die beiden Flotten werden bei 25°C vereinigt und der Gesamtflotte 10 Gew.-Teile Nabicarbonat zugegeben.

Mit der so hergestellten Flotte wird ein Mischgewebe aus Baumwolle/Zellulose geklotzt und wie unter Beispiel 1 fertig gestellt.

Man erhielt ein Gewebe, daß eine Zweifarbigkeit zeigte und den gewünschten nach einigen Haushaltwäschen gleichbleibenden Auswascheffekt aufwies.

### Beispiel 4

Zwei Flotten wurden gemäß Beispiel 1 hergestellt.

### Flotte a)

20 Gew.-Teile eines Reaktivfarbstoffes der Formel 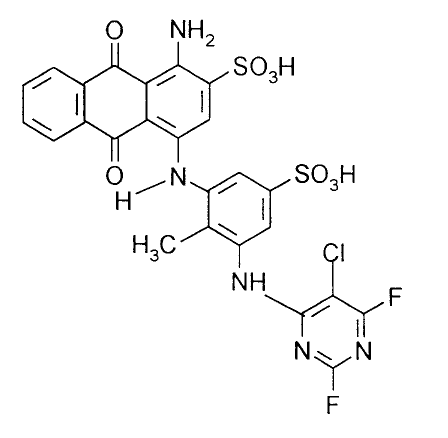
in Form des Na-Salzes,
2 Gew.-Teile des Netzmittels aus Beispiel 1
618 Gew.-Teile Wasser.

### Flotte b)

20 Gew.-Teile Pigment (Pigment Blue C.I. 15)
20 Gew.-Teile Binder aus Beispiel 1
10 Gew.-Teile Polyacrylsäure (aus Beispiel 1)
300 Gew.-Teile Wasser.

Die beiden Flotten a) und b) werden wie in Beispiel 1 vereinigt und der Gesamtflotte 10 Gew.-Teile Natriumbicarbonat zugegeben.

Mit der so hergestellten Flotte wird ein Baumwollgewebe wie in Beispiel 1 geklotzt, getrocknet und fixiert.

Man erhielt ein einheitlich blau gefärbtes Gewebe. Nach einigen Haushaltswäschen wurde der gewünschte gleichbleibende Auswascheffekt erhalten.

## Patentansprüche

1. Farbstoffpräparationen enthaltend:
a) mindestens einen alkalisch fixierbaren Reaktivfarbstoff
b) mindestens ein Pigment
c) mindestens einen Dispersionsbinder.

2. Farbstoffpräparationen gemäß Anspruch 1, dadurch gekennzeichnet, daß Dispersionsbinder auf Basis von Acrylat/Acrylnitril, Styrol, Acrylsäureester, Vinylacetat, Butadien oder Mischungen davon eingesetzt werden.

3. Verfahren zur Herstellung von Farbstoffpräparationen gemäß Anspruch 1, dadurch gekennzeichnet, daß man mindestens einen alkalisch fixierbaren Reaktivfarbstoff, mindestens ein Pigment und mindestens einen Dispersionsbinder mischt, gegebenenfalls homogenisiert und gegebenenfalls unter Zugabe weiterer Zusätze zu einer festen Präparation verarbeitet.

4. Verfahren zur Herstellung von Farbstoffpräparationen gemäß Anspruch 1, dadurch gekennzeichnet, daß man mindestens einen alkalisch fixierbaren Reaktivfarbstoff, mindestens ein Pigment und mindestens einen Dispersionsbinder zu einer wäßrigen Dispersion verarbeitet, die gegebenenfalls nach Zugabe weiterer Zusätze zu einer flüssigen Präparation oder Durckpaste weiterverarbeitet wird oder gegebenenfalls nach Zugabe weiterer Zusätze durch Trocknungsverfahren in eine feste Pulver- oder Granulatform überführt wird.

5. Klotzfarbeverfahren zum Färben von zellulosehaltigen Fasermaterialien, dadurch gekennzeichnet, daß eine wäßrige Flotte verwendet wird, die
a) mindestens einen alkalisch fixierbaren Reaktivfarbstoff,
b) mindestens ein Pigment und
c) mindestens einen Dispersionsbinder enthält.

6. Färbeflotten, enthaltend
800-900 Gew.-Teile Wasser
1-100 Gew.-Teile alkalisch fixierbaren Reaktivfarbstoff
1-100 Gew.-Teile Pigment und
10-40 Gew.-Teile Dispersionsbinder.

7. Farbstoffpräparationen gemäß Anspruch 1, dadurch gekennzeichnet, daß als Reaktivfarbstoff ein Farbstoff mit einer heterocyclischen Reaktivgruppe eingesetzt wird.

8. Farbstoffpräparationen gemäß Anspruch 1, dadurch gekennzeichnet, daß als Pigment Ruß eingesetzt wird.
